# EUROPÄISCHE PATENTANMELDUNG

(11) **EP 0 996 193 A1**
(43) Veröffentlichungstag der Anmeldung: **26.04.2000**
(21) Anmeldenummer: 98811033.4
(22) Anmeldetag: 16.10.1998
(51) Int. Cl.: H01R 4/64, H02G 15/188

(54) **Anschlussvorrichtung für einen Schirm eines elektrischen Kabels, elektrisches Kabel und Verfahren zur Herstellung einer Anschlussvorrichtung**

(71) Anmelder: Studer Draht-und Kabelwerk AG, 4658 Däniken (CH)
(72) Erfinder: Sarbach, Ewald, 5012 Schönenwerd (CH)
(74) Vertreter: Eder, Carl E.

(57) **Zusammenfassung**

Die Anschlussvorrichtung (11) besitzt ein metallisches, einstückiges, hülsenförmiges, den Schirm (7) eines Kabels (1) im Querschnitt mindestens annähernd umschliessendes Kontaktelement (15). Dieses weist um seine Achse (13) und das Kabel (1) herum verteilte, federnde, den Schirm (7) berührende Zungen (15d) und mindestens einen Crimp-Anschluss (15n) auf. Das Kontaktelement (15) hat mindestens einen die Achse (13) und das Kabel (1) im Querschnitt vollständig sowie unterbruchslos umschliessenden Abschnitt und/oder mindestens einen Längsbereich, der im Querschnitt vollständig sowie unterbruchslos von einem ring- und/oder hülsenförmigen Halter umschlossen und zusammengehalten ist. Die Zungen (15d) können grosse Durchmesserunterschiede des Schirms (7) ausgleichen. Die Anschlussvorrichtung (11) kann grosse Fehlerströme ableiten und ist ferner kostengünstig herstellbar sowie einfach am Kabel (1) montierbar.

## Beschreibung

Die Erfindung betrifft eine Anschlussvorrichtung für einen Schirm eines elektrischen Kabels.

Die Anschlussvorrichtung ist insbesondere für ein Starkstromkabel mit einem Schichtenmantel für eine Nenn-Spannung von mindestens 1 kV und beispielsweise 10 kV bis 50 kV oder bis 100 kV und für einen Nenn-Strom von mindestens 100 A bis beispielsweise ungefähr 1000 A vorgesehen. Derartige Kabel besitzen einen im wesentlichen metallischen Schirm, z.B. einen Schichtenmantel. Bei der Verwendung eines derartigen Kabels wird häufig bei einem Ende oder bei beiden Enden von diesem ein Erdungsleiter und/oder sonstiger Leiter mit Hilfe einer Anschlussvorrichtung bzw. Verbindungsvorrichtung an den Schirm angeschlossen, d.h. elektrisch leitend mit diesem verbunden.

Es sind beispielsweise Anschlussvorrichtungen bekannt, die als federndes Kontaktelement ein zu einem Ring gebogenes Lamellenband mit verdrehten Lamellen aufweisen. Das Lamellenband wird in montiertem Zustand von einem Halter umschlossen und am Schirm gehalten. Der Schirmdurchmesser handelsüblicher Kabel kann wegen Fabrikationstoleranzen relativ stark von einem vorgesehenen Sollwert abweichen. Die Lamellen ermöglichen jedoch nur einen kleinen Federweg. Ein aus einem Lamellenband gebildetes, einen bestimmten Durchmesser aufweisendes Kontaktelement kann daher nur kleine Durchmesser-Variationen des Schirms ausgleichen. Bekannte, ein Lamellenband aufweisende Anschlussvorrichtungen ergeben des weiteren nur eine geringe Fehlerstrom-Belastbarkeit und können zum Beispiel die häufig geforderte Belastung mit einem Fehlerstrom von 5 kA während 1 s nicht beschädigungslos ertragen. Das Montieren eines Lamellenbandes erfordert ferner einen komplizierten sowie teuren Halter und ist zeitraubend sowie aufwendig. Zudem ist ein Lamellenband relativ teuer.

Des weiteren ist zum Beispiel aus der DE 195 28 127 A eine Vorrichtung mit einem ring- oder hülsenförmigen Halter und einer zu einem Ring gebogenen Schraubenfeder bekannt. Diese ist in einer Ringnut im Inneren des Halters gehalten und hat gegen dem Grund der Ringnut geneigte Windungen. Diese bekannte Vorrichtung hat die Nachteile, dass die Herstellung des eine Ringnut aufweisenden Halters und die Herstellung der eine relativ komplizierte Form aufweisenden Schraubenfeder aufwendig sind. Ferner wird der durch die Vorrichtung mit dem Schirm zu verbindende Leiter wahrscheinlich wie bei ähnlichen, aus der Praxis bekannten Vorrichtungen durch relativ aufwendiges Hartlöten mit dem Halter verbunden.

Der Erfindung liegt die Aufgabe zugrunde, eine Anschlussvorrichtung zu schaffen, die Nachteile der bekannten Vorrichtungen behebt. Die Vorrichtung soll insbesondere den Ausgleich grosser Durchmesserunterschiede des Schirms ermöglichen sowie durch grosse Fehlerströme belastbar sein und dabei einfach sowie kostengünstig herstellbar und montierbar sein.

Diese Aufgabe wird gemäss der Erfindung durch eine Anschlussvorrichtung mit den Merkmalen des Anspruchs 1 gelöst.

Die Erfindung betrifft ferner ein Kabel mit den Merkmalen des Anspruchs 9 und ein Verfahren zur Herstellung einer Anschlussvorrichtung mit den Merkmalen des Anspruchs 10.

Vorteilhafte Ausgestaltungen der Anschlussvorrichtung gehen aus dem abhängigen Ansprüchen hervor.

Wenn die Anschlussvorrichtung an einem Kabel angebracht ist, berühren die federnden Zungen des Kontaktelements den Schirm des Kabels bei Kontaktstellen der Zungen. Die federnden Zungen des Kontaktelements ermöglichen einen gros-sen Federweg, der durch eine geeignete Festlegung der Länge der Zungen problemlos an die Erfordernisse angepasst werden kann. Das Kontaktelement kann derart ausgebildet sein, dass sich die Kontaktstelle jeder Zunge in zur Achse des Kabels und der Anschlussvorrichtung radialer Richtung vorzugsweise mindestens 2 mm und zum Beispiel mindestens 3 mm bis beispielsweise 5 mm oder noch mehr bewegen kann. Die ermöglicht, dass die Anschlussvorrichtung grosse Fabrikationstoleranzen des Schirm-Durchmessers ausgleichen kann und dass dieselbe Anschlussvorrichtung sogar für verschiedenen Kabeltypen, beispielsweise für Kabel mit verschiedenen Leiterquerschnittsflächen verwendbar ist

Das Kontaktelement hat vorzugsweise mindestens einen die Achse des Kontaktelements vollständig und unterbruchslos umschliessende Abschnitt. Die Anschlussvorrichtung kann jedoch stattdessen oder eventuell zusätzlich mindestens einen ringförmigen und/oder hülsenförmigen und/oder aus einer Rollfeder bestehenden Halter aufweisen, der mindestens einen Längsbereich des Kontaktelements im Querschnitt vollständig sowie unterbruchslos umschliesst und vorzugsweise aus einem metallischen Material besteht. Das Kontaktelement hat vorzugsweise mindestens einen Anschluss, der zusammen mit dem restlichen Kontaktelement aus einem einstückigem Körper besteht und vorzugsweise als Crimp-Anschluss ausgebildet ist.

Das Kontaktelement besteht aus einem metallischen Material, das beispielsweise Kupfer aufweist. Das Kontaktelement kann zum Beispiel - abhängig von der gewünschten Festigkeit und Elastizität - aus reinem, durch Kaltverformen halbhart oder hart gemachtem Kupfer oder aus einer Legierung bestehen, die zusätzlich zur Hauptkomponente Kupfer noch ein wenig Zirkonium und/oder Beryllium enthält.

Die Zungen des Kontaktelements können bei dessen serienmässiger Fabrikation aus einem einstückigen Werkstück wirtschaftlich durch einen Schneidvorgang, vorzugsweise durch Stanzen, gebildet und durch Biegen und/oder Abwinkeln plastisch verformt werden.

Bei der Verwendung der Anschlussvorrichtung kann ein Monteur das Kontaktelement und den allenfalls vorhandenen, dieses umschliessenden Halter manuell und ohne Werkzeug auf einen Endabschnitt des Kabels aufschieben. Die einfache Montierbarkeit der Anschlussvorrichtung ist unter anderem deshalb von grossem Vorteil, weil die Anschlussvorrichtung nicht im Herstellerwerk des Kabels und/oder der Anschlussvorrichtung, sondern am Verwendungsort des Kabels montiert wird. Das Kontaktelement wird vorzugsweise vor dem Aufschieben auf das Kabel und beispielsweise bereits im Herstellerwerk durch Crimpen mit einem kurzen, beispielsweise 0,3 m bis 1 m langen, elektrischen Leiter verbunden.

Das Kontaktelement hat vorzugsweise einen mit den Zungen versehenen und/oder verbundenene, ring- und/oder hülsenförmigen, im allgemeinen zylindrischen Abschnitt, dessen Aussendurchmesser und/oder Innendurchmesser abhängig von der Querschnittsabmessung des Kabels etwa 20 mm oder 25 mm bis 50 mm beträgt. Die Materialdicke des Kontaktelements beträgt vorzugsweise mindestens 0,5 mm, vorzugsweise höchstens 1,5 mm und zum Beipiel ungefähr 1 mm. Das Kontaktelement besitzt vorzugsweise mindestens 10 und beispielsweise 15 bis 50 Zungen, die auf einen Kranz oder auf axial gegeneinander versetzte Kränze verteilt sind und zusammen eine Gesamt-Querschnittsfläche haben, die abhängig vom Durchmesser des zylindrischen Abschnitts vorzugsweise mindestens 30 mm², vorzugsweise höchstens 120 mm² und zum Beispiel ungefähr 40 mm² bis 80 mm² beträgt. Erfindungsgemässe, an Kabel montierte Anschlussvorrichtungen ermöglichen hohe Fehlerstrom-Belastungen. Tests von Kontaktelementen mit in den vorgenannten Bereichen liegenden Abmessungen haben erwiesen, dass die Kabel und Anschlussvorrichtungen die häufig geforderte Belastung durch einen Fehlerstrom von 5 kA während 1 s ohne Schaden überstehen.

Der Erfindungsgegenstand und weitere Vorteile von diesem werden anschliessend anhand in den Zeichnungen dargestellter Ausführungsbeispiele erläutert. In den Zeichnungen zeigen,
Fig. 1 eine Seitenansicht eines elektrischen Kabels und einer Anschlussvorrichtung,
Fig. 2 einen etwas schematisierten Axialschnitt durch die Anschlussvorrichtung mit dem in Ansicht dargestellten Kabel in grösserem Massstab,
Fig. 3 eine Abwicklung von einem Abschnitt des Kontaktelements der Anschlussvorrichtung,
Fig. 4 eine Seitenansicht eines Kabels und einer anderen Anschlussvorrichtung,
Fig. 5 einen etwas schematisierten Axialschnitt durch die Vorrichtung gemäss Fig. 4 mit dem in Ansicht gezeichneten Kabel,
Fig. 6 eine Abwicklung von einem Abschnitt des Kontaktelements der Anschlussvorrichtung gemäss den Figuren 4 und 5,
Fig. 7 einen Querschnitt entlang der Linie VII - VII der Fig. 4 durch die in dieser dargestellte Anschlussvorrichtung und
Fig. 8 einen Axialschnitt durch die Anschlussvorrichtung gemäss den Figuren 4 bis 7, aber mit einem dickerem Kabel.

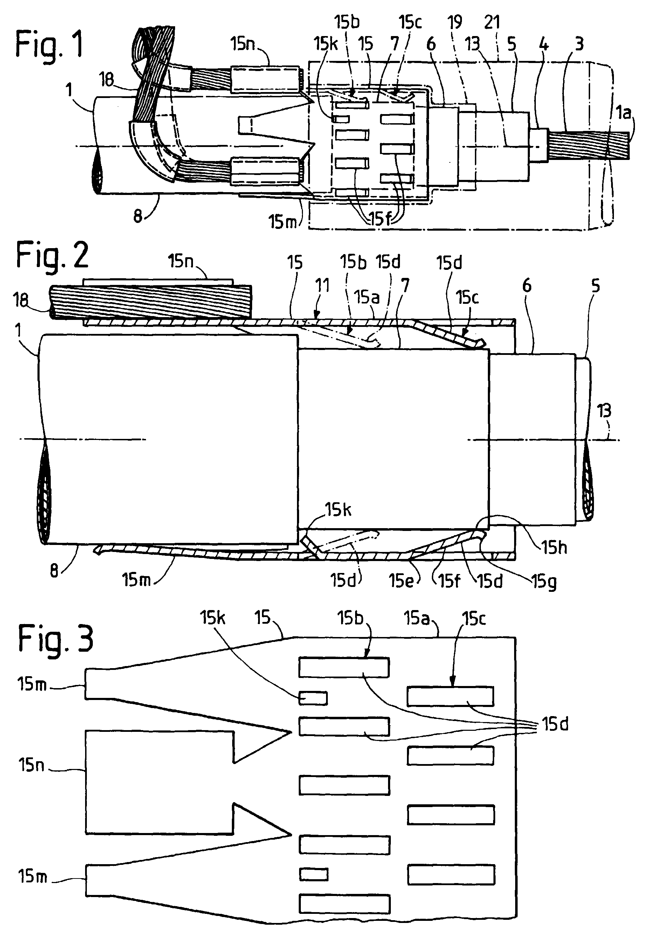

Das in den Figuren 1 und 2 ersichtliche, einadrige, elektrische Kabel 1 ist für Mittelspannungen, d.h. für Spannungen von 10 kV bis 50 kV vorgesehen. Das Kabel hat von innen nach aussen der Reihe nach einen aus verseilten Drähten gebildeten Leiter 3, eine innere Halbleiterschicht 4, eine innere Isolationsschicht 5, eine äussere Halbleiterschicht 6, einen Schirm 7 und eine äussere Isolationsschicht 8. Der Schirm 7 ist elektrisch leitend sowie metallisch und besteht vorzugsweise aus einem dünnwandigen, etwas biegbaren, kompakten, lochfreien Kupfer- oder Aluminium-Rohr, das zum Beispiel aus einem Schichtenmantel besteht und aus einem Blechstreifen mit in der Kabel-Längsrichtung verlaufenden, einander überlappenden, fest miteinander verbundenen Randabschnitten gebildet ist, die innere Isolationsschicht 5 und die äussere Halbleiterschicht 6 im Querschnitt überall dicht umschliesst sowie zum Beispiel aussen und/oder eventuell innen mit einem Bindemittel beschichtet sowie durch das Bindemittel mit der angrenzenden Schicht des Kabels verklebt ist.

Die äussere Isolierschicht 8 umschliesst den Schirm 7 im mittleren, sich über den grössten Teil der Länge des Kabels erstreckenden Längsbereich. Das Kabel 1 hat jedoch in der Nähe des in den Figuren 1, 2 sichbaren Kabelendes 1a einen Abschnitt mit freigelegtem, blankem Schirm 7. Das Kabel ist dort mit einer ebenfalls in den Figuren 1 und 2 ersichtlichen Anschlussvorrichtung 11 bzw. Verbindungsvorrichtung 11 zum Anschliessen des Schirms versehen. Die Anschlussvorrichtung 11 hat eine Achse 13, die mit der Achse zusammenfällt bzw. mit dieser Achse identisch ist. Die Anschlusssvorrichtung 11 besitzt ein elektrisch leitendes, metallisches Kontaktelement 15, das eine an beiden Enden offene Hülse bildet und in Fig. 3 in abgewickeltem Zustand dargestellt ist. Das Kontaktelement 15 hat einen ring- und/oder hülsenförmigen, im wesentlichen zylindrischen, zur Achse 15 koaxialen Abschnitt 15a. Der Abschnitt 15a ist mit zwei axial gegeneinander versetzten Zungen-Kränzen 15b und 15c versehen. Jeder Zungen-Kranz 15b, 15c hat mehrere, nämlich vorzugsweise mindestens sechs um die Achse 13 herum verteilte, federnde Zungen 15d, die alle gleich ausgebildet und bemessen und sind. Jede Zunge 15d ist länglich und hat eine Längsrichtung, die bei radialer Draufsicht auf die Zunge entlang der Achse 13 verläuft. Jede Zunge 15d hat eine Wurzel 15e, bei der die Zunge mit dem restlichen Kontaktelement zusammenhängt. Die Wurzel 15e befindet sich zum Beispiel bei allen Zungen an demjenigen Zungenende, das weiter vom Kabelende 1a entfernt ist, in dessen Nähe die Anschlussvorrichtung angeordnet ist. Jede Zunge ist stellenweise in ihrer Längsrichtung abgebogen und/oder abgewinkelt und hat einen von der Wurzel 15e weg nach innen zur Achse 13 hin geneigten Hauptabschnitt 15f und einen Endabschnitt 15g, der vom Hauptabschnitt 15f weg zum freien Ende der Zunge hin von der Achse 13 weg nach aussen abgebogen sowie nach aussen geneigt ist. Der Hauptabschnitt 15f ist wesentlich länger als der Endabschnitt 15g und in Axialschnitt beispielsweise mindestens im entspannten Zustand der Zunge mindestens annähernd gerade. Die innere, sich näher bei der Achse 13 befindende Fläche jeder Zunge 15d bildet beim Übergang von Hauptabschnitt 15f zum Endabschnitt 15g der Zunge eine Kontaktstelle 15h, bei der die Zunge bei montierter Anschlussvorrichtung die Aussenfläche des Schirms 7 berührt. Die Zungen des Zungen-Kranzes 15c sind entlang dem Umfang des Kontaktelements gegen die Zungen des Zungen-Kranzes 15b versetzt, so dass sich jede Zunge des Kranzes 15c zwischen gedachten, axialen Verlängerungen von zwei Zungen des Kranzes 15b befindet. Zwischen den entlang dem Umfang des Kontaktelements aufeinander folgenden Zungen 15d sind zum zylindrischen Teil des ring- und/oder hülsenförmigen Abschnitts 15a gehörende, axiale Stege vorhanden. Der Innendurchmesser des Abschnitts 15a oder - genauer gesagt - der Durchmesser der zylindrischen Innenfläche dieses Abschnitts 15a ist mindestens gleich dem Aussendurchmesser des Schirms 7 und nämlich grösser als dieser Aussendurchmesser. Die Länge jeder Zunge 15d beträgt - entlang der Längsmittellinie der Zunge gemessen - mindestens 25% und zum Beispiel ungefähr 30% bis 50% des Innendurchmessers des ring- und/oder hülsenförmigen Abschnitts 15a.

Der ring- und/oder hülsenförmige Abschnitt 15a ist noch mit einigen, beispielsweise drei um die Achse 13 herum verteilten Anschlägen 15k versehen. Diese sind zwischen Zungen des weiter vom Kabelende 1a entfernten Zungen-Kranzes 15b angeordnet. Jeder Anschlag 15k besteht aus einer Lasche, hängt an seinem sich näher beim Kabelende 1a befindenden Rand oder Ende mit dem restlichen Kontaktelement zusammen ragt vom genannten Ende oder Rand des Anschlags weg geneigt nach innen. Die Anschläge 15k sind wesentlich kürzer als die Zungen und können mehr oder weniger starr oder ein wenig federnd sein. Die Anschläge stehen an dem beim Freilegen des Schirms 7 gebildeten, dem Kabelende 1a zugewandten Rand der äusseren Isolationsschicht 8 des Kabels an. Der hülsenförmige Abschnitt 15a des Kontaktelements 15 hat zwischen den beiden Zungen-Kränzen 15b, 15c und auf den einander abgewandten Seiten von diesen je einen ringförmigen Abschnitt, der die Achse 13 zusammenhängend sowie vollständig unterbruchslos umschliesst. Der hülsenförmige Abschnitt 15a hat für jede Zunge 15d und jeden Anschlag 15k ein allseitig von Material umschlossenes Loch. Das Kontaktelement 15 hat an seinem sich näher beim Kabelende 1a befindenden Ende einen kreisförmigen, zur Achse koaxialen Rand, der unterbruchslos und glatt entlang den ganzem Umfang des Kontaktelements verläuft. Das Kontaktelement ist am weiter vom Kabelende 1a entferntem Ende des hülsenförmigen Abschnitts 15a mit drei oder eventuell mehr um die Achse herum verteilten, federnden Zentrierungslaschen 15 m versehen. Diese haben an ihrem sich näher beim Kabelende 1a befindenden Ende eine mit dem restlichen Kontaktelement zusammenhängende Wurzel, einen von dieser und vom hülsenförmigen Abschnitt 15a wegragenden, zur Achse hin geneigten Hauptabschnitt und - analog wie die Zungen 15d - einen kurzen von Hauptabschnitt zum freien Ende hin nach aussen abgebogenen Endabschnitt. Das Kontaktelement hat ferner mindestens eine Crimp-Anschluss 15n und nämlich drei um die Achse herum verteilte Crimp-Anschlüsse 15n. Jeder Anschluss 15n ist durch eine Lasche oder Fahne gebildet, die auf der dem Kabelende 1a abgewandten Seite des hülsenförmigen Abschnitts 15a von diesem weg ragt. Das Kontaktelement 15 und seine Zungen 15a, Anschläge 15k, Zentrierungslaschen 15m und Anschlüsse 15n bestehen aus einem einstückigen metallischen Körper.

Ein zum Verbinden des Kontaktelements 15 mit der Erde dienender, elektrischen Leiter 18 besitzt mehrere, nämlich drei miteinander verseilte Drahtbündel und eventuell noch eine elektrische Isolation. Der in den Figuren 1 und 2 ersichtliche Endabschnitt des Leiters 18 ist in diese drei Drahtbündel aufgezweigt. Jedes von diesen ist durch Crimpen mechanisch sowie elektrisch leitend mit einem der Crimp-Anschlüsse 15n des Kontaktelements 15 verbunden.

Das Kontaktelement 15 ist durch schematisch und strichpunktiert in Fig. 1 angedeutete Halte- und Dichtungsmittel 19 am Kabel 1 gehalten und derart dicht mit diesem verbunden, dass kein Wasser in das Innere des Kabels eindringen kann. Die Halte- und Dichtungsmittel 19 weisen beispielsweise einen Schrumpfschlauch auf, der im Querschnitt mindestens den hülsenförmigen Abschnitt 15a umschliesst. Die Halte- und Dichtungsmittel 19 können auch noch ein Kittband oder Kittmasse oder dergleichen aufweisen, um das Kontaktelement bei den sich ausserhalb der äusseren Isolationsschicht 8 des Kabels befindenden Anschlüssen 15n dicht mit der äusseren Isolationsschicht zu verbinden. Am Kabel ist ferner noch ein nur in Fig. 1 schematisch strichpunktiert angedeuteter Endverschluss 21 angeordnet, der sich beispielsweise von den Anschlüssen 15n bis mindestens zum Kabelende 1a erstreckt, beispielsweise den hülsenförmigen Abschnitt 15a des Kontaktelements 15 im Querschnitt umschliesst und im übrigen ähnlich wie bekannte Endverschlüsse ausgebildet ist. Der Leiter 18 und die Halte- und Dichtungsmittel 19 können eventuell ebenfalls noch als Bestandteile der Anschlussvorrichtung angesehen werden.

Der dem in Fig. 1 ersichtlichen Kabelende 1a abgewandte, andere Endabschnitt des Kabels 1 ist beispielsweise mit einer Anschlussvorrichtung versehen, die gleich wie die Anschlussvorrichtung 1 ausgebildet ist.

Das Kontaktelement 15 kann in einem Herstellerwerk hergestellt werden. Bei einer möglichen Herstellungsart wird zuerst ein metallisches, hülsenförmiges, hohlzylindrisches, einstückiges im Querschnitt überall lückenlos und unterbruchslos zusammenhängendes Ausgangs-Werkstücke bereitgestellt, beispielsweise von einem längeren Rohr abgeschnitten. Dann werden durch mindestens einen Schneidvorgang, nämlich durch Stanzen die Umrissformen der Zungen 15d, Anschläge 15k, Laschen 15m und Anschlüsse 15n gebildet. Ferner werden die Zungen, Anschläge, Laschen und Anschlüsse in Axialschnitten und/oder Querschnitten durch plastisches Verformen umgeformt, d.h. abgebogen und/oder abgewinkelt. Diese Umformung kann eventuell mindestens zum Teil gleichzeitig mit dem Schneid/Stanzvorgang erfolgen.

Bei einer anderen möglichen Herstellungsweise wird zuerst ein einstückiger, ebener Blechteil bereitgestellt, der als Ausgangs-Werkstück dient. Dann werden die Zungen 15d, Anschläge 15k, Laschen 15m, und Anschlüsse 15n durch Schneiden, d.h. Stanzen geschnitten und beispielsweise im gleichen Arbeitsgang mindestens teilweise durch plastisches Verformen umgeformt. Anschliessend wird der Blechteil zu einer Hülse gebogen. Danach werden die aneinanderstossenden Ränder des Blechteils zum Beispiel durch Hartlöten oder eventuell Schweissen miteinander verbunden.

Die Anschlüsse 15n können beim Formen der Zungen 15d, Anschläge 15k und Laschen 15m beispielsweise derart vorgeformt werden, dass sie im Querschnitt ungefähr U-förmig sind. Der Leiter 18 wird dann zum Beispiel bereits im Herstellerwerk durch Crimpen bzw. Zusammenquetschen der vorgeformten Anschlüsse 15n mit diesen verbunden. Nach dem Crimpen bildet dann jeder Anschluss 15n eine im Querschnitt annähernd geschlossene Hülse.

Wenn ein Kabel an irgend einem Verwendungsort verlegt und/oder installiert wird, können zum Beispiel zwei zum Anbringen bei einander abgewandten Enden des Kabels bestimmte Kontaktelemente 15, Halte- und Dichtungsmittel 19 und zwei Endverschlüsse 21 zum Verwendungsort des Kabels gebracht werden. Ein Monteur kann das Kontaktelement manuell ohne irgendwelche Werkzeuge in axialer Richtung auf den vorbereiteten Kabelendabschnitt schieben, bis die Anschläge 15k am Rand der äusseren Isolationsschicht 8 anstehen. Die Ausbildungen der Zungen 15d und Zentrierungslaschen 15m gewährleisten dabei, dass die Zungen und Laschen leicht auf das Kabel geschoben und diesem entlang gleiten können. Wenn sich das Kontaktelement in der vorgesehenen Stellung befindet, kann der Monteur die Halte- und Dichtungsmittel 19 sowie den Endverschluss 21 am Kabel anbringen und das Kontaktelement dadurch am Kabel fixieren. Ferner kann das vom Kontaktelement entfernte Ende des Leiters 18 direkt oder über einen zusätzlichen Leiter mit einem Erdungselement verbunden werden.

Die in axialem Abstand voneinander stehenden Kontaktstellen 15h der zu den beiden Zungen-Kränzen 15b, 15c gehörenden Zungen 15d und die das Kontaktelement in axialem Abstand von den Kontaktstellen der Zungen am Kabel abstützenden, führenden und zentrierenden Zentrierungslaschen 15m halten das Kontaktelement in einer zum Kabel koaxialen Lage, obschon zwischen dem Kabel 1 und der zylindrischen Innenfläche des Kontaktelements 15 ein relativ grosser Zwischenraum vorhanden sein kann. Dies trägt dazu bei, dass die Kontaktstellen aller federnden Zungen mit gleichen oder ähnlichen Druckkräften gegen den Schirm gedrückt werden und dass die Zungen eine gut leitende, zuverlässige, dauerhafte, elektrische Verbindung des Kontaktelements 15 mit dem Schirm 7 ergeben.

Falls zwischen dem Schirm und der Erde ein elektrisches Potential vorhanden ist, kann dieses durch einen vom Schirm 7 zur Erde fliessenden, elektrischen Strom abgebaut werden. Dieser Strom fliesst vom Schirm über die Zungen 15d in das restliche, einstückige Kontaktelement 15 und durch die ebenfalls zu diesem gehörenden Crimp-Anschlüsse 15n in den Leiter 18. Der elektrische Strom muss also vom Schirm bis zu den Crimp-Anschlüssen nur die vom Schirm und den Zungen gebildeten Berührungskontakte und keine anderen Berührungskontakte durchfliessen. Dies trägt zu einem zuverlässigen Abbau des genannten elektrischen Potentials bei.

Das Kabel 1 und das Kontaktelement 15 können bei der Benutzung des Kabels zum Leiten eines elektrischen Stroms und insbesondere bei einem elektrischen Kurzschluss und/oder Erdschluss stellenweise erhitzt werden. Solche Erhitzungen können vorübergehende Änderungen der axialen sowie radialen Abmessungen der erhitzten Teile verursachen. Die federnden Zungen können solche temporären Abmessungsänderungen gut und problemlos ausgleichen. Die bei den Kontaktstellen 15h der Zungen vor der Achse 13 weg nach aussen ragenden Endabschnitte 15g der Zungen ermöglichen, dass die Kontaktstellen 15h sowie die freien Enden der Zungen bei thermisch verursachten, axialen Abmessungsänderungen ausgehend von den in den Figuren 1 und 2 gezeichneter Stellungen nötigenfalls leicht nach rechts zum Kabelende 1a hin gleiten können.

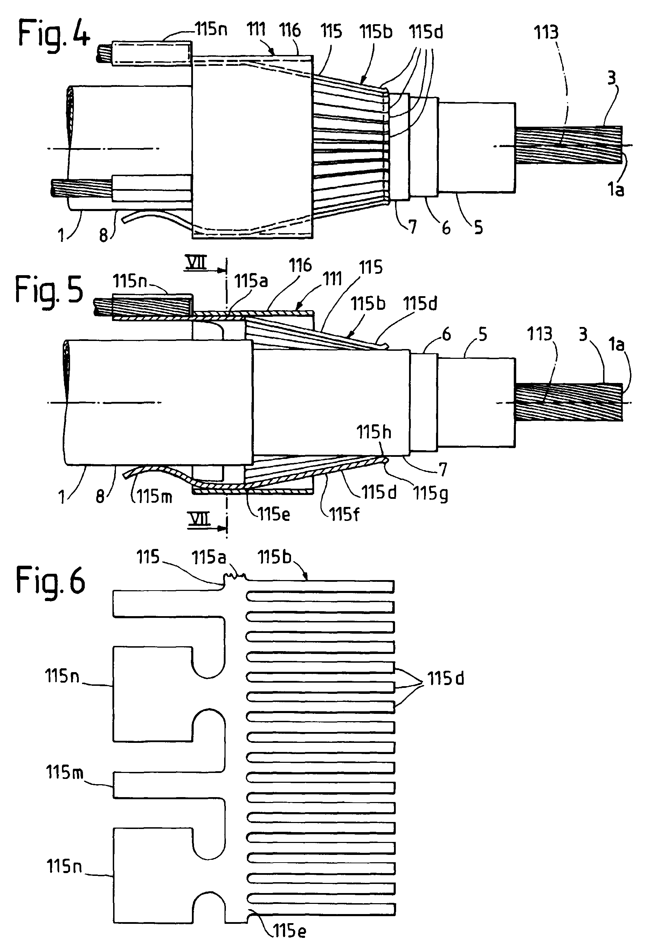

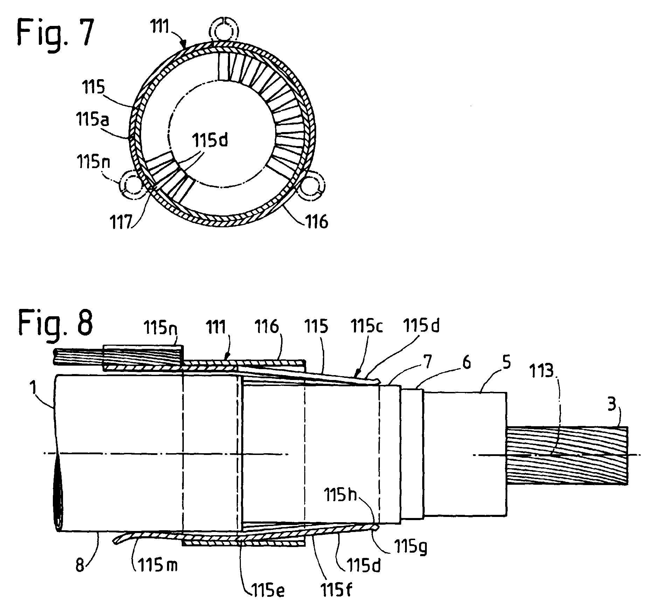

Das in den Figuren 4, 5 ersichtlichen Kabel und dessen Teile sind mit der gleichen Bezugsnummern bezeichnet wie das in den Figuren 1 und 2 dargestellte Kabel und dessen Teile. Die ebenfalls in den Figuren 4, 5 und zudem in Fig. 7 ersichtliche Anschlussvorrichtung 111 bzw. Verbindungsvorrichtung 111 hat eine mit der Achse des Kabels zusammenfallende oder mit dieser identische Achse 113. Die Anschlussvorrichtung 111 besitzt zwei separate, metallische Teile, nämlich ein Kontaktelement 115 und einen Halter 116. Das Kontaktelement bildet annähernd eine Hülse, ist aber im Querschnitt offen, d.h. nirgends entlang dem ganzen Umfang lückenlos zusammenhängend. Das Kontaktelement 115 hat einen ring- und/oder hülsenförmigen, im allgemeinen zylindrischen Abschnitt 115a. Dieser ist offen, so dass er die Achse 113 nur annähernd umschliesst und bei einer Umfangsstelle durch einen in Fig. 7 ersichtlichen Spalt 117 unterbrochen ist. Der Abschnitt 115a ist abgesehen vom Spalt 117 kompakt, d.h. frei von Löchern und Schlitzen. Das in Fig. 6 noch separat in abgewickeltem Zustand dargestellte Kontaktelement 115 hat nur einen einzigen Zungen-Kranz 115b mit um die Achse 113 herum verteilten, länglichen Zungen 115d. Die Länge der Zungen 115d ist jedoch im Vergleich zum Innendurchmesser des ring- und/oder hülsenförmigen Abschnitts 115a grösser als beim Kontaktelement 15 und beträgt zum Beispiel mindestens 50% bis beispielsweise ungefähr 100% des Innendurchmessers des Abschnitts 115a. Jede Zunge 115d hat eine mit dem ring- und/oder hülsenförmigen Abschnitt 115a zusammenhängende Wurzel 115e und erstreckt sich vom Abschnitt 115a weg in Richtung zum Kabelende 1a bis unmittelbar zu dem sich nähernden Kabelende 1a befindenden Rand oder Ende des Kontaktelements 115. Die einander entlang dem Umfang des Kontaktelements benachbarten Zungen sind durch Einschnitte voneinander getrennt. Jede Zunge 115d hat - analog wie die Zungen 115d - einen von der Wurzel 115e weg zur Achse 113 hin geneigten Hauptabschnitt 115f und einen kurzen von diesem weg nach aussen abgebogenen und/oder abgewinkelten Endabschnitt 115g, der mindestens zum Teil zum Kabelende 1a hin von der Achse 113 weg nach aussen geneigt ist und das freie Ende der Zunge bildet.

Das Kontaktelement 115 hat ferner entlang dem Umfang abwechselnd aufeinander folgende Zentrierungslaschen 115m sowie Crimp-Anschlüsse 115n. Die Laschen 115m und Anschlüsse 115n hängen auf der den Zungen abgewandten Seite des ring- und/oder hülsenförmigen Abschnitts 115a mit diesem zusammen und ragen von diesem, den Zungen 115d und dem Kabelende 1a weg. Die Laschen 115m haben zumindest im Axialschnitt ähnliche Formen wie die Laschen 15m. Das Kontaktelement 115 hat keine der Anschlägen 15k des Kontaktelements 15 entsprechenden Anschläge, könnte jedoch auch noch solche aufweisen.

Der Halter 116 ist ring- und/oder hülsenförmig, an beiden Enden offen und im Querschnitt geschlossen. Die einstückige, zylindrische Wand des Halters ist vollständig kompakt, d.h. frei von Löchern, Schlitzen und dergleichen. Ferner ist der aus einem Ring- und/oder einer Hülse bestehende Halter 116 an beiden Enden durch einen kreisförmigen Rand begrenzt, der sich unterbruchslos sowie glatt entlang dem ganzen Umfang des Halters erstreckt und weder Vorsprünge noch Einschnitte aufweist. Der Halter 116 umschliesst im Querschnitt einen Längsbereich des Kontaktelements 115, steht mit dem weiter von Kabelende 1a entferntem Rand an den vom Abschnitt 115a weg mehr oder weniger radial nach aussen ragenden Crimp-Anschlüssen 115n an und erstreckt sich mindestens über die ganze axiale Abmessung des ring- und/oder hülsenförmigen Abschnitts 115a des Kontaktelements 115 beispielsweise bis in den Bereich der Zungen 115d. Der ring- und/oder hülsenförmige Abschnitt 115a des Kontaktelements 115 liegt mit seiner Aussenfläche an der Innenfläche des Halters 116 an. Der Halter 116 hält also das im Querschnitt offene Kontaktelement 115 in seiner hülsenartigen Form.

Bei der Herstellung der Anschlussvorrichtung 111 wird das Kontaktelement 115 im Herstellerwerk aus einem ebenen Blechstück herausgeschnitten, nämlich herausgestanzt, wobei die Umrissformen der Zungen, Laschen und Anschlüsse gebildet werden. Beim Stanzvorgang und/oder danach werden die Zungen 115d sowie die Laschen 115 in der Längsrichtung abgebogen und/oder abgewinkelt und die Anschlüsse 115n im Querschnitt beispielsweise ungefähr U-förmig vorgebogen. Anschliessend wird das Kontaktelement 115 um die Achse 113 herum gebogen, so dass es eine offene Hülse bildet. Danach werden die Drahtbündel des Leiters 18 durch Crimpen der Anschlüsse 115n mit dem Kontaktelement 115 verbunden. Der Halter 116 kann beispielsweise von einem hohlzylindrischen, metallischen Rohr abgeschnitten werden und erfordert - abgesehen von einer allfälligen Entgratung - keine weitere Bearbeitung. Der Halter wird dann - beispielsweise schon im Herstellerwerk - auf das Kontaktelement geschoben.

Bei der Verwendung des Kabels 1 und der Anschlussvorrichtung 111 kann ein Monteur das Kontaktelement 115 und den Halter 116 gleichzeitig manuell auf das Kabel aufschieben. Danach kann der Monteur nicht gezeichnete Halte- und Dichtungsmittel sowie einen nicht gezeichneten Endverschluss am Kabel anbringen und das Kontaktelement 115 sowie den Halter 116 dadurch am Kabel fixieren und wasserdicht mit diesem verbinden.

Das in Fig. 8 ersichtliche Kabel und dessen Teile sind wiederum mit den gleichen Bezugsnummern bezeichnet wie bei den vorher beschriebenen und gezeichneten Kabeln. Das in Fig. 8 ersichtliche Kabel 1 hat einen Leiter 3 mit einer leitenden Querschnittsfläche, die grösser, nämlich mindestens 20% und zum Beispiel dreimal bis viermal grösser ist als diejenige des Leiters 3 des in den Figuren 4,5 gezeichneten Kabels. Dementsprechend sind bei den in Fig. 8 gezeichneten Kabel auch die Aussendurchmesser des Schirms 7 und der äusseren Isolationsschicht grösser - nämlich mindestens 5% oder mindestens 10% und zum Beispiel mindestens oder ungefähr 30% grösser als beim Kabel gemäss den Figuren 4,5.

Die in Fig. 8 ersichtliche Anschlussvorrichtung 111 hat ein Kontaktelement 115 und einen Halter 116, die identisch ausgebildet und bemessen sind wie das Kontaktelement 115 und den Halter 116 gemäss den Figuren 4 bis 7. Die Zungen 115d ergeben in radialer Richtung einen so grossen Federweg, dass ein und dasselbe Kontaktelement 115 und ein und derselbe Halter 116 wahlweise an Kabeln mit verschiedenen Querschnittsflächen des Leiters 3 angebracht werden können.

Somit vorgängig nichts anders geschrieben wurde, kann die Anschlussvorrichtung 111 ähnlich ausgebildet sein, ähnlich montiert werden und ähnliche Eigenschaften aufweisen wie die Anschlussvorrichtung 11.

Die Anschlussvorrichtungen können auf verschiedene Arten modifiziert werden. Man kann insbesondere Merkmale der verschiedenen Anschlussvorrichtungen 11 und 111 miteinander kombinieren. Ferner könnte man beispielsweise noch mehr als zwei axial gegeneinander versetzte Zungen-Kränzen vorsehen. Des weiteren können axial gegeneinander versetzten Zungen zwischen einander hineinragen. Ferner könnte man zwei axial gegeneinander versetzte Zungen-Kränze vorsehen, deren Zungen von ihren Wurzeln entlang dem Kabel in entgegengesetzten Richtungen wegragen. Die mindestens im entspannten Zustand im wesentlichen geraden Abschnitte 15f, 115f der Zungen können durch in ihrer Längsrichtung - d.h. im Axialschnitt - mindestens stellenweise gebogene Abschnitte ersetzt werden. Der Halter 116 kann statt aus einem Rohrstück aus einer Rollfeder bestehen, die eine Spirale bildende, aneinander anliegende Windungen aufweist, im Herstellerwerk von einer Seite des Kontaktelements her in mehr oder weniger tangentialer Richtung um das Kontaktelement herumgerollt und bei der Verwendung der Anschlussvorrichtung gemeinsam mit dem Kontaktelement in axialer Richtung auf das Kabel geschoben wird. Eventuell können sogar zwei oder noch mehr je aus einer Rollfeder bestehende, verschiedene Längsbereiche des Kontaktelements umschliessende Halter vorgesehen werden. Das Kontaktelement kann des weiteren mehr als drei, beispielsweise sechs oder noch mehr um die Achse herum verteilte Crimp-Anschlüsse aufweisen. Ferner können die Crimp-Anschlüsse von dem im allgemeinen zylindrischen Abschnitt des Kontaktelements weg nach innen zur Achse hin ragen, so dass der im allgemeinen zylindrische Abschnitt eine das ganze Kontaktelement umhüllende, zylindrische Hüllfläche definiert. Jede Anschlussvorrichtung kann zudem auch an einem Kabel montiert werden, das mehrere, zum Beispiel drei elektrische, gegeneinander isolierte Leiter und einen diese umschliessenden Schirm besitzt.

## Patentansprüche

1. Anschlussvorrichtung für einen Schirm (7) eines elektrischen Kabels (1) mit einem elektrisch leitenden, eine Achse (13, 113) mindestens annähernd umschliessenden, zum Berühren des Schirms (7) bestimmten Kontaktelement (15, 115) mit um die Achse (13, 113) herum verteilten, federnden Zungen (15d, 115d), die zusammen mit den restlichen Kontaktelement (15, 115) aus einem einstückigen Körper bestehen, dadurch gekennzeichnet, dass das Kontaktelement (15) mindestens einen die Achse (13) vollständig umschliessenden Abschnitt hat, und/oder dass mindestens ein ringförmiger und/oder hülsenförmiger und/oder aus einer Rollfeder bestehender Halter (116) vorhanden ist, der mindestens einen Längsbereich des Kontaktelements (115) im Querschnitt vollständig umschliesst.

2. Anschlussvorrichtung nach Anspruch 1, dadurch gekennzeichnet, dass jede Zunge (15d, 115d) eine mit dem restlichen Kontaktelement (15, 115) zusammenhängende Wurzel (15e, 115e) und ein von dieser entlang der Achse (13, 113) in Abstand stehendes, freies Ende hat.

3. Anschlussvorrichtung nach Anspruch 2, dadurch gekennzeichnet, dass jede Zunge (15d, 115d) einen von der Wurzel (15e, 115e) weg mindestens stellenweise zur Achse (13, 113) hin geneigten Abschnitt (15f, 115f) und einen von diesem zum freien Ende der Zunge (15d, 115d) hin von der Achse (13, 113) weg geneigten Abschnitt (15g, 115g) hat.

4. Anschlussvorrichtung nach einem der Ansprüche 1 bis 3, dadurch gekennzeichnet, dass das Kontaktelement (15, 115) mindestens einen zusammen mit dem restlichen Kontaktelement (15, 115) aus einem einstückigen Körper bestehenden Anschluss (15n, 115n) aufweist, der vorzugsweise als Crimp-Anschluss (15n, 115n) ausgebildet ist.

5. Anschlussvorrichtung nach einem der Ansprüche 1 bis 4, dadurch gekennzeichnet, dass jede Zunge (15d, 115d) eine zum Berühren des Schirms (7) bestimmte Kontaktstelle (15h, 115h) hat und dass das Kontaktelement (15, 115) um die Achse (13, 113) herum verteilte, federnde Laschen (15m, 115m) aufweist, die von einer mit dem restlichen Kontaktelement (15, 115) zusammenhängenden Wurzel weg zu einem freien Ende hin mindestens stellenweise zur Achse (13, 113) hin geneigt und ausgebildet sind, um bei in axialer Richtung in Abstand von den Kontaktstellen (15h, 115h) stehenden Stellen am Kabel (1) anzugreifen und das Kontaktelement (15, 115) dadurch zu zentrieren.

6. Anschlussvorrichtung nach einem der Ansprüche 1 bis 5, dadurch gekennzeichnet, dass das Kontaktelement (15) in axialer Richtung gegeneinander versetzte Zungen (15d) besitzt.

7. Anschlussvorrichtung nach einem der Ansprüche 1 bis 6, dadurch gekennzeichnet, dass das Kontaktelement (15) mindestens einen Anschlag (15k) zum Anstehen an einem Rand einer den Schirm (7) in einem Längsbereich des Kabels (1) im Querschnitt umschliessenden Isolationsschicht (8) aufweist.

8. Elektrisches Kabel mit einem Schirm (7) und mindestens einer Anschlussvorrichtung (11, 111) nach einem der Ansprüche 1 bis 7, dadurch gekennzeichnet, dass die Zungen (15d, 115d) des Kontaktelements (15, 115) den Schirm (7) berühren.

9. Verfahren zur Herstellung einer Anschlussvorrichtung nach einem der Ansprüche 1 bis 7, dadurch gekennzeichnet, dass ein zur Bildung des Kontaktelements (15, 115) bestimmtes, metallisches, hülsenförmiges oder ebenes Werkstück bereitgestellt wird und durch einen Schneidvorgang mit Zungen (15d, 115d) versehen wird und dass die Zungen (15d, 115d) plastisch verformt werden.
